# NEW EUROPEAN PATENT SPECIFICATION

(11) **EP 3 045 047 B2**
(45) Date of publication and mention of the opposition decision: **06.11.2024**
(45) Mention of the grant of the patent: 09.01.2019
(21) Application number: 14844955.6
(22) Date of filing: 11.09.2014
(51) Int. Cl.: A23C 11/00, A23L 2/38, A23C 13/14

(54) **EMULSIFIED COMPOSITION AND MILK DRINK**
EMULGIERTE ZUSAMMENSETZUNG UND MILCHGETRÄNK
COMPOSITION ÉMULSIFIÉE ET BOISSON LACTÉE

(30) Priority: 13.09.2013 JP 2013190561
(43) Date of publication of application: 20.07.2016
(60) Divisional application: 18207527.5
(73) Proprietor: Mitsubishi Chemical Corporation, Tokyo 100-8251 (JP)
(72) Inventor: MATSUURA Tsutashi, Yokohama-shi Kanagawa 227-8502 (JP); TOMABECHI Masaki, Tokyo 100-8251 (JP); IKENOUE Satoko, Yokohama-shi Kanagawa 227-8502 (JP); MASUKO Tomosada, Yokohama-shi Kanagawa 227-8502 (JP)
(74) Representative: Hoffmann Eitle
(86) International application number: PCT/JP2014/074139
(87) International publication number: WO 2015/037679

(56) References cited:
- WO-A1-2007/046333
- WO-A1-2013/116687
- JP-A- 2002 223 697
- JP-A- 2007 215 451
- JP-A- 2011 045 364
- JP-A- 2011 234 697
- JP-A- 2012 170 415
- US-A1- 2012 093 973
- US-A1- 2013 216 647
- GAUCHERON F: "The minerals of milk", REPRODUCTION, NUTRITION, DEVELOPMENT, PARIS, FR, vol. 45, no. 4, 1 July 2005 (2005-07-01), pages 473 - 483, XP002411682
- ZAMBERLIN ET AL.: "Mineral elements in milk and dairy products", MLJEKARSTVO, vol. 62, no. 2, 24 May 2012 (2012-05-24), pages 111 - 125

## Description

### Technical Field

The present invention relates to an emulsified composition containing a dairy product and an emulsifier, more specifically to an emulsified composition further containing a magnesium material.

### Background Art

In milk beverages, which are preference beverages with a large market, the technique of using an emulsified composition for beverage use employing a cost-advantageous dairy product, such as fresh cheese, in place of conventionally used dairy products (cow's milk, fresh cream, whole milk powder, skimmed milk powder, evaporated milk, sweetened condensed milk, unsweetened condensed milk, degreased condensed milk, etc.) is known.

For example, an emulsified composition having improved dispersibility and emulsification stability, in which solid fresh cheese having a high content of milk fat is used with an organic acid monoglyceride, an emulsifier having an HLB of 10 or more, and sodium caseinate (PTL 1), an emulsified composition, in which a high-HLB emulsifier and a low-HLB emulsifier are combined such that the proportion of the former used is higher than the latter, and which thus has excellent emulsification stability even when the proportion of fresh cheese relative to water used in the composition is high (PTL 2), a cheese emulsion using fresh cheese at a high concentration, preferably at a concentration of 50% or more, and having excellent flavor and excellent storage stability, which contains an emulsifier having an HLB of 8 to 14, fresh cheese, and water, and is prepared by a first step of dispersing the emulsifier in water to form a vesicle having an average particle size of 10 to 600 nm, and a second step of adding fresh cheese to the emulsifier-dispersed aqueous solution prepared in the first the step to cause emulsification (PTL 3), and the like are known.

These conventional emulsified compositions certainly have excellent emulsification stability. However, in the case where such a composition is actually used in a food or beverage, particularly in the case where it is used at a low concentration or in the case where, as milk components, a dairy product such as fresh cheese is used as a main component, and milk components other than the dairy product such as fresh cheese are added in small amounts or not used at all, as compared with conventional foods and beverages, the resulting food or beverage is insufficient in richness or milky flavor and gives a watery feel, for example. Thus, as a substitute of a conventional dairy product, it has been difficult to reproduce the same level of quality of taste.

Meanwhile, techniques related to foods and beverages having a reduced content of milk components but having the same level of milky flavor are known.

For example, a condensed-milk-like composition having a low content of non-fat milk solids but having excellent milky flavor, in which the content of non-fat milk solids in the condensed-milk-like composition is 15 wt% or less, the condensed-milk-like composition contains 0.3 wt% or more potassium and sodium, and the weight ratio between sodium and potassium is 1 : 1 to 10 (PTL 4), a beverage having a low content of dairy products but having a milk-like thick texture imparted thereto, which is a beverage containing a dairy product and a salt added thereto (at least one kind selected from the group consisting of sodium salts, potassium salts, calcium salts, and magnesium salts), characterized in that the content of added salts in the total amount of the beverage is 0.0005 to 0.1 mass% (PTL 5), a novel milk-flavored beverage containing no milk protein or milk fat but having milk-like flavor, which contains a whey mineral, preferably a whey mineral whose calcium content in solids is less than 2 mass%, preferably in an amount (as solids) of 0.1 to 5 mass%, and more preferably 0.3 to 2.5 mass%, and a sweetener, preferably a sweetener that is partially or fully lactose or a high-intensity sweetener, preferably in an amount of 0.08 to 12%, and more preferably 0.2 to 6%, in terms of sucrose as the degree of sweetness, as well as a food or beverage using the milk-flavored beverage (PTL 6), and the like are known.

Patent documents US 2012/0093973 A1 and US 2013/0216647 A1 disclose beverages and milk-like beverages having a milk-like appearance and consistency and methods of making such beverages.

Patent document JP 2011 045364 A discloses an emulsified composition for foods and drinks using fresh cheese having a high milk solid content.

Patent document JP 2011 234697 A discloses a method for producing a cheese emulsified product having a high fresh cheese content as well as flavor and preservation stability properties.

Patent document JP 2012 170415A discloses a nonfat milk solid-containing oil-in-water emulsified product usable as a substitute for cow milk and condensed milk.

Patent document JP 2002 223697 A discloses a concentrated milk-like composition having milk flavor.

### Citation List

### Patent Literature

PTL 1: JP-A-2004-267013
PTL 2: JP-A-2011-45364
PTL 3: JP-A-2011-234697
PTL 4: JP-A-2002-223697
PTL 5: JP-A-2007-215451
PTL 6: WO 2010/101143

### Summary of Invention

### Technical Problem

However, with these conventional techniques, in the case of application to an emulsified composition using a milk component, particularly a dairy product having a high total solid content, wherein the ratio of fat to total solids is high, such as fresh cheese, or to a milk beverage using the same, it has still been difficult to reproduce the original richness and natural milky flavor of milk.

An object of the invention is, in an emulsified composition using a dairy product such as fresh cheese and also a milk beverage using the same, to improve the quality of taste, including richness, milky flavor, etc.

### Solution to Problem

As a result of extensive research, the present inventors have found that the above problems can be solved by mixing a specific material together with a dairy product such as fresh cheese and thus accomplished the invention.

The present invention is as defined in the appended claims.

### Advantageous Effects of Invention

According to the invention, even when a dairy product other than cow's milk, such as fresh cheese, is used in an emulsified composition or a milk beverage, the same level of quality of taste, including richness, milky flavor, etc., as in the case of using conventional milk components, such as cow's milk, can be obtained.

### Description of Embodiments

Hereinafter, embodiments of the invention will be described in detail. As used herein, "mass%" and "wt%" have the same meaning.

The emulsified composition of the invention is an emulsified composition containing a dairy product, an emulsifier, and a magnesium material, characterized in that the dairy product has a total solid content of 30 mass% or more and the ratio of milk fat to total solids of 30 mass% or more, the mass ratio between fat and magnesium (fat: magnesium) in the composition is 1 : 0.001 to 1 : 0.005 and the mass ratio between fat and sodium in the emulsified composition (fat : sodium) is 1 : 0.0001 to 1 : 0.02.

### <Dairy Product>

First, the dairy product used in the invention will be described.

The dairy product used in the invention is a dairy product having a total solid content of 30 mass% or more with the ratio of milk fat to total solids being 30 mass% or more. A total solid content herein means a value obtained by subtracting the moisture content from the total weight of the dairy product.

The total solid content of the dairy product should be 30 mass% or more, more preferably 40 mass% or more, particularly preferably 50 mass% or more, and most preferably 55 mass% or more, and is preferably 99 mass% or less, more preferably 95 mass% or less, and particularly preferably 90 mass% or less. Within this range, the dairy product, which is a main raw material of the emulsified composition, contains a suitable amount of moisture. Accordingly, a more condensed, thicker, and lower-cost emulsified composition can be efficiently produced with fewer problems of viscosity, etc.; therefore, this is preferable.

In addition, the ratio of milk fat to total solids should be 30 mass% or more. It is preferably 35 mass% or more, more preferably 40 mass% or more, particularly preferably 45 mass% or more, and most preferably 50 mass% or more, and is preferably 99 mass% or less, more preferably 95 mass% or less, and particularly preferably 90 mass% or less. Within this range, the emulsified composition is rich in milk fat and thus has thick flavor, the cost is reduced, and also the flavor-enhancing effect of the addition of the below-mentioned magnesium material is sufficiently exerted; therefore, this is preferable. Milk fat herein means a value measured in accordance with the analysis method specified in the Ministerial Ordinance on Milk and Milk Products Concerning Compositional Standards, etc. (Ministerial Ordinance Concerning Milk) in Japan.

The dairy product used in the invention is the milk of an animal, or a processed product thereof. The dairy product having a total solid content of 30 mass% or more with the ratio of milk fat to total solids being 30 mass% or more, is a dairy product selected from, for example, cheese such as fresh cheese, cream (fresh cream, double cream, clotted cream, etc.), butter, butter oil, and the like. Cream, butter, fresh cheese, and the like are preferable, and cream and fresh cheese are the most preferable.

Incidentally, it is also possible to use a combination of two or more kinds of dairy products. In that case, the total solid content and the ratio of milk fat are calculated from the total amount of two or more kinds of dairy products.

In addition, although the dairy product content in the emulsified composition is not particularly limited, it is preferably 1 mass% or more, more preferably 10 mass% or more, and still more preferably 20 mass% or more, and is preferably 99 mass% or less, more preferably 90 mass% or less, and still more preferably 80 mass% or less. When the dairy product content in the emulsified composition is within this range, an emulsified composition that is easy to produce, has high stability, and is optimal in terms of cost can be provided.

### [Fresh Cheese]

Fresh cheese will be described. Fresh cheese in the invention is a kind of natural cheese, and is non-matured cheese that does not undergo a maturing process.

Fresh cheese can be classified into a fermented type and a non-fermented type. It is preferable that the fresh cheese used in the invention is a non-fermented type because, as a result, mild and light flavor can be obtained. Incidentally, non-fermented cheese is produced from milk, buttermilk, or fresh cream using a production technique including a coagulation effect without fermentation by lactic acid bacteria, and has the same chemical, physical, and sensual characteristics as those fermented by lactic acid bacteria.

Specific examples of fresh cheese include cream cheese, mozzarella cheese, cottage cheese, ricotta, mascarpone, fromage blanc, paneer, and rubing. Among them, cream cheese, which hardly affects the flavor of the food or beverage, is preferable, and non-fermented cream cheese is particularly preferable.

The total solid content of the fresh cheese is not particularly limited, but is preferably 90 mass% or less, more preferably 80 mass% or less, and most preferably 75 mass% or less. In addition, the lower limit thereof is usually 20 mass%, preferably 30 mass%, and more preferably 40 mass%. When the total solid content is within this range, the characteristic taste and flavor of the cheese are enhanced, resulting in improved flavor. A total solid content herein means a value obtained by subtracting the moisture content from the total mass of the fresh cheese.

In addition, the ratio of milk fat to total solids of the fresh cheese used in the invention is usually 30 mass% or more, preferably 40 mass% or more, and still more preferably 50 mass% or more, and the upper limit thereof is usually 90 mass%. When the ratio of milk fat is within this range, the cost per milk fat is reduced, and the production of the fresh cheese itself is easy; therefore, this is preferable. Incidentally, milk fat herein means a value measured in accordance with the processed cheese analysis method specified in the Ministerial Ordinance on Milk and Milk Products Concerning Compositional Standards, etc..

### <Emulsifier>

The emulsifier is at least one selected from the group consisting of sucrose fatty acid esters, polysorbate, glycerol fatty acid esters, sorbitan fatty acid esters, propylene glycol fatty acid esters, sodium stearoyl lactylate, calcium stearoyl lactylate, enzymatically decomposed lecithin, lecithin, and saponin. They may be used alone, and it is also possible to use two or more kinds together.

Among them, sucrose fatty acid esters, organic acid monoglycerides, polyglycerol fatty acid esters, and sorbitan fatty acid esters are preferable, and sucrose fatty acid esters, organic acid monoglycerides, and polyglycerol fatty acid esters are still more preferable because, as a result, the emulsified composition and a milk beverage using the same have excellent emulsification stability.

In addition, in the above emulsifier, food emulsifiers effective against heat-resistant bacteria, which are harmful bacteria in a beverage, may also be used alone or in combination. Food emulsifiers effective against heat-resistant bacteria to be used are not particularly limited as long as they are food emulsifiers having such effects, but sucrose fatty acid esters, polyglycerol fatty acid esters, and organic acid monoglycerides are preferable. In particular, sucrose fatty acid esters, polyglycerol fatty acid esters, and organic acid monoglycerides, wherein the constituent fatty acids have 14 to 22 carbon atoms, are more preferable, and sucrose fatty acid esters and polyglycerol fatty acid esters, wherein the constituent fatty acids have 16 to 18 carbon atoms, are still more preferable. They have high effectiveness against bacteria and thus are preferable.

As sucrose fatty acid esters or polyglycerol fatty acid esters used, the monoester content thereof is usually 50 mass% or more, preferably 60 mass% or more, and still more preferably 70 mass% or more. Such esters have high effectiveness against bacteria and thus are preferable. As polyglycerol fatty acid esters, the average polymerization degree of polyglycerol is preferably 2 to 5, and still more preferably 2 to 3. Such esters have high effectiveness against bacteria and thus are the most preferable.

The amount of emulsifier used (the content in the emulsified composition) is usually 0.01 mass% or more, preferably 0.05 mass% or more, and more preferably 0.1 mass% or more, and is usually 10 mass% or less, preferably 5 mass% or less, and more preferably 3 mass% or less.

When the emulsifier content in the emulsified composition is within this range, without affecting the taste or excessively increasing the viscosity, the emulsification-stabilizing effect of the emulsifier can be effectively obtained with excellent handleability.

The content ratio between the dairy product and the emulsifier in the emulsified composition (dairy product : emulsifier, mass ratio) is 1 : 0.0001 to 1 : 10, preferably 1 : 0.001 to 1 : 1, and more preferably 1 : 0.005 to 1 : 0.1.

The content ratio between milk fat and the emulsifier in the emulsified composition (milk fat : emulsifier, mass ratio) is 1 : 0.0001 to 1 : 100, preferably 1 : 0.001 to 1 : 10, more preferably 1 : 0.005 to 1 : 1 , and most preferably 1 : 0.01 to 1 : 0.1.

The content ratio between the emulsifier and the magnesium material in the emulsified composition (emulsifier : magnesium material, mass ratio) is 1 : 0.00001 to 1 : 100, preferably 1 : 0.0001 to 1 : 10, more preferably 1 : 0.001 to 1 : 1, and particularly preferably 1 : 0.01 to 1 : 0.5.

### <Magnesium Material>

The invention is characterized in that a magnesium material, which is a mineral ingredient, is used.

A mineral ingredient is prepared by chemically or physically treating, purifying, or concentrating, for example, an edible mineral, water such as river water or sea water, or a mineral source of animal, vegetable, or like biological origin into a form easy to use in foods.

Examples of magnesium materials include materials selected from whey minerals, magnesium chloride, magnesium oxide, magnesium carbonate, magnesium sulfate, bittern (crude seawater magnesium chloride), dolomite, raw salt, magnesium stearate, magnesium monohydrogen phosphate, trimagnesium phosphate, magnesium silicate, magnesium hydroxide, magnesium acetate, magnesium citrate, magnesium malate, magnesium benzoate, magnesium gluconate, magnesium L-glutamate, sepiolite, talc, and phytin. Examples also include, using them as raw materials, materials formed into other edible organic acid or inorganic acid salts and materials powdered using cyclodextrin, trehalose, and the like.

A whey mineral herein is obtained from a mineral contained in the milk of an animal, whose contents of milk fat, protein, lactose, and the like are reduced by a specific operation, and which thus has a higher mineral content than the raw material used. For example, temperature changes, such as heating and cooling, and separation operations using centrifugal force, a film, a resin, and the like can be applied alone or in combination to milk itself or whey (substance resulting from the production of casein or cheese from milk) to give a whey mineral. Specific examples of whey minerals include whey minerals and concentrates thereof, mineral-concentrated whey and powders thereof, and whey permeate (containing partially purified lactose). In addition, it is also possible to use that a specific mineral is further purified, fractionated, concentrated, or powdered. Further, it is also possible to use a composition prepared by mixing a whey mineral with other auxiliary materials. As a low-cost whey mineral with excellent addition efficiency, it is preferable that the mass ratio of mineral to solids of the whey mineral is usually at least 1.5 times the mass ratio of mineral to solids of the used raw material, preferably at least 2.0 times, more preferably at least 2.5 times, particularly preferably at least 3.0 times, and most preferably at least 4.0 times.

Among magnesium materials, whey minerals, magnesium chloride, magnesium sulfate, magnesium gluconate, magnesium acetate, magnesium citrate, magnesium malate, bittern (crude seawater magnesium chloride), and magnesium L-glutamate are preferable because they have high solubility in water and easy to add to the emulsified composition. In particular, magnesium chloride, magnesium sulfate, and bittern (crude seawater magnesium chloride) are preferable, and magnesium chloride is the most preferable.

Incidentally, a magnesium material is a material containing magnesium, and refers to, for example, a material containing magnesium in an amount of 0.01 mass% or more, preferably 0.1 mass% or more, particularly preferably 1 mass% or more, and most preferably 5 mass% or more.

The amount of magnesium material used (the content in the emulsified composition) is, in terms of magnesium, usually 0.0001 mass% or more, preferably 0.001 mass% or more, more preferably 0.005 mass% or more, and most preferably 0.01 mass% or more, and is usually 1 mass% or less, preferably 0.5 mass% or less, and more preferably 0.25 mass% or less.

When the magnesium content in the emulsified composition is within this range, without the foreign taste due to magnesium being felt, the enhancing effect on richness and milky flavor can be obtained.

Further, other minerals may be also be contained. Examples of minerals include elements such as zinc, potassium, calcium, chromium, selenium, iron, copper, sodium, manganese, molybdenum, iodine, and phosphorus. Among them, it is preferable to use sodium or potassium.

When the above magnesium material contains these minerals, these minerals can also be added to the composition by using the magnesium material. It is also possible to mix a material containing these minerals into the composition separately from the magnesium material.

Specific examples of mineral-containing materials include calcium monohydrogen phosphate, calcium chloride, calcium sulfate, calcium oxide, calcined calcium, calcium carbonate, calcium citrate, calcium lactate, calcium hydroxide, sodium ferrous citrate, iron lactate, ferric chloride, heme iron, magnesium carbonate, trimagnesium phosphate, potassium gluconate, calcium gluconate, zinc gluconate, cupric gluconate, non-calcined coral calcium, shell meal, and eggshell powder. They may be used alone, and it is also possible to use a mixture of two or more kinds.

Bittern, dolomite, whey minerals, raw salt, phytin, and the like described above as examples of magnesium materials also contain minerals other than magnesium.

In the invention, it is preferable to use a whey mineral containing magnesium, sodium, and potassium. In addition, it is preferable to further use a sodium material containing sodium and/or a potassium material containing potassium. A sodium material and a potassium material are materials containing sodium and potassium, respectively. For example, sodium or potassium is contained in an amount of 0.01 mass% or more, preferably 0.1 mass% or more, and most preferably 1 mass% or more in the material.

The sodium content in the emulsified composition is, in terms of sodium, usually 0.0001 mass% or more, preferably 0.001 mass% or more, and more preferably 0.01 mass% or more, and is usually 2 mass% or less, preferably 1 mass% or less, and more preferably 0.5 mass% or less.

When the sodium content in the emulsified composition is within this range, this is effective in further increasing the enhancing effect of magnesium on richness and milky flavor, without the foreign taste due to sodium being felt.

The potassium content in the emulsified composition is, in terms of potassium, usually 0.0001 mass% or more, preferably 0.001 mass% or more, and more preferably 0.01 mass% or more, and is usually 4 mass% or less, preferably 2 mass% or less, and more preferably 1 mass% or less.

When the emulsifier content in the emulsified composition is within this range, this is effective in further increasing the enhancing effect of magnesium on richness and milky flavor, without the foreign taste due to potassium being felt.

### <Emulsified Composition>

It is preferable that the emulsified composition of the invention is produced by mixing at least the above dairy product, emulsifier, and magnesium material.

The invention is characterized in that the mass ratio between fat and magnesium in the emulsified composition (fat : magnesium) is 1 : 0.001 to 1 : 0.005. Within this range, fat and magnesium are well-balanced, and, without the foreign taste due to magnesium being felt, the enhancing effect on richness and milky flavor can be obtained.

Fat is, for example, fat from the dairy product and other components, and is the total amount in the emulsified composition.

In addition, magnesium is the total amount in the composition, including magnesium from the magnesium material and also magnesium from the dairy product and other components.

The mass ratio between fat and magnesium in the emulsified composition (fat : magnesium) is 1 : 0.001 to 1 : 0.005.

Further, the mass ratio between fat and sodium in the emulsified composition (fat : sodium) is 1 : 0.0001 to 1 : 0.02. This range is effective in further increasing the enhancing effect of magnesium on richness and milky flavor, without the foreign taste due to sodium being felt. The mass ratio is preferably 1 : 0.001 to 1 : 0.015, and more preferably 1 : 0.003 to 1 : 0.01.

In addition, it is preferable that the mass ratio between fat and potassium in the emulsified composition (fat : potassium) is 1 : 0.0001 to 1 : 0.04. This range is effective in further increasing the enhancing effect of magnesium on richness and milky flavor, without the foreign taste due to potassium being felt. The mass ratio is preferably 1 : 0.001 to 1 : 0.03, and more preferably 1 : 0.005 to 1 : 0.02.

It is preferable that the emulsified composition of the invention is produced by mixing the above dairy product, emulsifier, and magnesium material.

The emulsified composition of the invention may also be obtained by simply mixing the dairy product, the emulsifier, and the magnesium material, followed by stirring using a homomixer or a homogenizer to emulsify the mixture.

In addition, for example, the emulsifier is added to water to give an emulsifier-containing dispersion, then the dairy product is added to the dispersion, followed by stirring using a homomixer or a homogenizer to emulsify the mixture, thereby giving a composition containing water, a dairy product, and an emulsifier (composition A), and the composition A and the magnesium material are mixed; the emulsified composition of the invention can also be obtained in this manner.

It is also possible that during the production of the composition A, a liquid to serve as a beverage base, such as water, a coffee extract, or a tea extract, which will be described later in detail, and other components are mixed therewith. It is also possible that a liquid to serve as a beverage base and other components are mixed with the composition A, and then the magnesium material is mixed therewith, thereby giving the emulsified composition of the invention.

At this time, in the dispersion containing an emulsifier, the emulsifier may be in the form of a self-assembly, such as a vesicle. For emulsification, it is possible that preliminary emulsification is first performed using a homomixer, a pau blender, or the like, and then main emulsification is performed using a homogenizer; like this, several stirring/emulsification steps may be performed. The emulsification step using a homogenizer may be performed once, but is preferably performed at least twice for improving the stability of the resulting emulsified composition and a milk beverage using the same. The emulsification step using a homogenizer may be performed before or after the sterilization step, but is preferably performed before the sterilization step for the ease of controlling the production process. In addition, the emulsification step is usually performed under heated conditions at 40 to 80°C, and the emulsification step using a homogenizer is usually performed under high-pressure conditions at 5 to 200 MPa, preferably 10 to 100 MPa.

Incidentally, this emulsified composition may contain components other than those described above. For example, milk components other than the dairy product or vegetable fats can be added. Milk components are not particularly limited, and examples thereof include milk proteins such as casein and whey, and salts thereof, milk, whole milk, skimmed milk, condensed milk, degreased condensed milk, whole milk powder, skimmed milk powder, and lactose. Vegetable fats are not limited as long as they are oils and fats of vegetable origin, but examples thereof usually include vegetable oils and fats, such as soybean milk, cacao butter, coconut oil, palm oil, palm kernel oil, coconut oil, soybean oil, corn oil, sunflower oil, rice oil, and rapeseed oil, as well as oil and fats prepared by purifying these vegetable oils and fats or processing them by hydrogenation, transesterification, etc.

These milk components or vegetable fats can be blended to replace a part of the dairy product content in the emulsified composition. Therefore, the total amount of these components and the dairy product in the emulsified composition is preferably 1 mass% or more, more preferably 10 mass% or more, and still more preferably 20 mass% or more, and is preferably 99 mass% or less, more preferably 90 mass% or less, and still more preferably 80 mass% or less. Within this range, an emulsified composition that is easy to produce, has high stability, and is optimal in terms of cost can be provided.

In addition to the dairy product, water, the emulsifier, and the milk components other than the dairy product, this emulsified composition may also contain other additives and the like. Examples of other additives include antioxidants, thickening stabilizers, pH adjusters such as organic acids and inorganic acids, and flavoring agents.

For example, it is preferable that at least either casein or a casein salt is further contained. Examples of casein and casein salts include sodium caseinate, potassium caseinate, magnesium caseinate, and calcium caseinate. Sodium caseinate and potassium caseinate are preferable because they are excellent in terms of solubility in water, emulsifying power, and emulsification-stabilizing effect. The content of casein and casein salts in the emulsified composition is preferably 0.001 mass% or more, more preferably 0.01 mass% or more, and most preferably 0.1 mass% or more, and is preferably 10 mass% or less, more preferably 5 mass% or less, and most preferably 3 mass% or less.

In addition, the solids content in the emulsified composition is preferably 1 mass% or more, more preferably 5 mass% or more, and still more preferably 10 mass% or more, and is preferably 99 mass% or less, more preferably 95 mass% or less, and still more preferably 90 mass% or less. When the solids content in the emulsified composition is not less than the lower limit, this is more preferable in terms of cost per milk solids, without the milky flavor being weakened. When the solids content is not more than the upper limit, the stability is not likely to decrease due to the lack of moisture, and the production tends to be easy.

Incidentally, the obtained emulsified composition may be subjected to a sterilization treatment by a usual sterilization method for foods, such as low-temperature long-time pasteurization, high-temperature long-time pasteurization, high-temperature short-time pasteurization, or ultrahigh-temperature flash pasteurization. The sterilization method is not particularly limited. However, ultrahigh-temperature flash pasteurization, which is less likely to cause flavor deterioration due to heat, is preferable. Further, as methods for ultrahigh-temperature flash pasteurization, tube-type indirect pasteurization, injection- or infusion-type direct pasteurization, and joule-type pasteurization are preferable.

### <Milk Beverage>

Next, the milk beverage of the invention will be described.

The milk beverage of the invention is made from an emulsified composition comprising a dairy product, an emulsifier, and a magnesium material. The emulsified composition may be directly used as a milk beverage. Alternatively, it is also possible that components necessary for a milk beverage are mixed with the emulsified composition produced, and used as a milk beverage.

In the milk beverage, in terms of the ease of production and also of improving the emulsification stability during storage and the flavor of the milk beverage, it is preferable that the dairy product is emulsified and mixed as an emulsified composition.

That is, in the production of the milk beverage of the invention, it is preferable that a previously produced emulsified composition, a liquid to serve as a beverage base (water, a coffee extract, a tea extract, etc.), and other additives are mixed.

Other additives may be previously added to the liquid to serve as a beverage base, or may also be admixed when the emulsified composition and the liquid to serve as a beverage base are mixed.

It is preferable that the milk beverage of the invention contains at least one component selected from the group consisting of the following (A), (B), (D), and (E). When these components meet the above definition of a magnesium material, they may also serve as magnesium materials.
(A) Polysaccharides (hereinafter sometimes referred to as "component (A)".)
(B) Milk flavoring agents (hereinafter sometimes referred to as "component (B)".)
(D) Buttermilks (hereinafter sometimes referred to as "component (D)".)
(E) Yeasts (hereinafter sometimes referred to as "component (E)".)

### <(A) Polysaccharide>

Preferred examples of polysaccharides are dietary fibers and starches.

### (Dietary Fiber)

Dietary fibers are polysaccharides contained in foods, which are not digested by human digestive enzymes. Most of them are polysaccharides of vegetable or microbial origin. Specific examples thereof include water-soluble dietary fibers, such as pectin, agarose, glucomannan, polydextrose, indigestible dextrin, sodium arginine, inulin, carrageenan, guar gum, locust bean gum, tara gum, xanthan gum, gellan gum, fermented cellulose, pullulan, and soybean polysaccharides, and water-insoluble dietary fibers, such as cellulose, lignin, chitin, and chitosan.

Among these dietary fibers, for use in a milk beverage, water-soluble dietary fibers are preferable.

### (Starch)

Examples of starches are starches and modified products thereof, starch hydrolysates, etc.

Raw materials from which starches are derived are not particularly limited. Typical examples of raw materials include potato, wheat, corn, waxy corn, high-amylose corn, sweet potato, rice, glutinous rice, cassava, kudzu, dogtooth violet, mung bean, sago palm, bracken, and Cardiocrinum cordatum var. glehnii.

Examples of modified starch products include modified starches having improved properties or functionality imparted thereto, which are prepared by modifying starches in various ways (enzymatically, physically, chemically) by a wet process or a dry process. Specific examples thereof include enzyme-treated starch, sodium starch glycolate, sodium starch phosphate, acetylated distarch adipate, acetylated distarch phosphate, acetylated oxidized starch, hydroxypropyl distarch phosphate, phosphated distarch phosphate, phosphated starch, distarch phosphate, starch acetate, hydroxypropyl starch, sodium starch octenylsuccinate, oxidized starch, acid-treated starch, pregelatinized starch, dry starch, heat-treated starch, oil- or fat-modified starch, granulated starch, and oil-absorptive starch.

Among these starches and modified products thereof, for use in a milk beverage, those having high water solubility and high emulsifiability are preferable, and sodium starch octenylsuccinate is preferable.

"Starch hydrolysate" is the general term for products resulting from the hydrolysis of polysaccharides in starch, such as amylose and amylopectin, by heat, an acid, an alkali, an enzyme, etc., and is also referred to as dextrin. The main component of a starch hydrolysate is a polysaccharide of α-1,4-linked or 1,6-linked glucose. Specific examples thereof include soluble starch, thin glue starch, amylodextrin, white dextrin, yellow dextrin, British gum, erythrodextrin, achrodextrin, maltodextrin, enzyme-modified maltodextrin, starch syrup, and maltose syrup, as well as reduced products thereof, such as saccharified reduced starch, reduced maltose starch syrup, and reduced polydextrose.

Among these starch hydrolysates, for use in a milk beverage, those having high water solubility are preferable. For this reason, as a raw material having a high content of highly water-compatible polysaccharides of α-1,6-linked glucose, it is preferable to use a starch in which the mass ratio of amylopectin to the total mass of amylose and amylopectin in the starch used is preferably 80% or more, sill more preferably 85% or more, particularly preferably 90% or more, and most preferably 95% or more. Alternatively, as a starch hydrolysate having a high content of highly soluble low-molecular polysaccharides, the dextrose equivalent thereof, which is an index that indicates the hydrolysis degree of the starch measured by the Lane-Eynon method or Somogyi method, is preferably 3 or more, more preferably 8 or more, and most preferably 15 or more.

Incidentally, even when a raw material in which the mass ratio of amylopectin to the total mass of amylose and amylopectin in the starch is less than 80% is used, the water solubility can be enhanced by changing the linkage of glucose with an enzyme or the like.

As starch hydrolysates, commercially available products such as "Pinedex #3" and "Pinedex #100" manufactured by Matsutani Chemical Industry Co., Ltd., "Fujioligo G67", "Nisshoku Brancholigo", and "Nisshoku Cleartose" manufactured by Nihon Shokuhin Kako Co., Ltd., "Sundec #30" "Sundec #70", "Sundec #70FN" "Sundec #150", "Sundec #180", "Sundec #250", "Sundec #300", "Oligotose Liquid", and "Oligotose Powder" manufactured by Sanwa Starch Co., Ltd., and "Smart Taste" manufactured by San-Ei Gen F.F.I., Inc., are usable.

Among the above polysaccharides, for use in a milk beverage, water-soluble dietary fibers, sodium starch octenylsuccinate, and starch hydrolysates are preferable in terms of water solubility, and starch hydrolysates are more preferable.

The above polysaccharides may be used alone, and it is also possible to use a mixture of two or more kinds.

### <(B) Milk Flavoring Agent>

A milk flavoring agent is a flavoring agent having a milk aroma component, and is not particularly limited as long as it is a flavoring agent containing aroma components characteristic of milk. However, fresh milk flavoring agents having the flavor of fresh milk, such as short-chain free fatty acids including butanoic acid, valeric acid, caproic acid, and the like, as well as esters thereof, are particularly preferable. It is still more preferable that the content of aroma components having the flavor of fermented cheese, including α-methyl ketones, aldehydes such as 3-methylbutanal, and the like, is low.

As milk flavoring agents, commercially available products are usable. The production method for aroma components to be contained in the milk-flavoring agent may be chemical synthesis, extraction or purification from milk, or their mixture. However, those made from milk as a raw material are more preferable, and milk-flavoring agents produced by a reaction between a milk component and an enzyme are still more preferable because they are capable of reproducing the natural flavor of milk. They may be used alone, and it is also possible to use a mixture of two or more kinds.

### <(D) Buttermilk>

A buttermilk is a liquid called buttermilk or butter serum, which is separated upon the extraction of a milk fat fraction as butter by churning or the like from cream made from cow's milk by centrifugation or the like. Buttermilks include condensed buttermilk in liquid form prepared by condensation and buttermilk powder in powder form prepared by further spray drying. They may be used alone, and it is also possible to use a mixture of two or more kinds.

Separately, in the process of separating cream or butter from cow's milk, fermentation by acid-producing bacteria may be performed, or an organic acid or like acid may be added. As the buttermilk used in the invention, a buttermilk that has not undergone such fermentation or acid addition is preferable.

As buttermilks, commercially available products such as "Buttermilk Powder" manufactured by Yotsuba Milk Products Co., Ltd., are usable.

### <(E) Yeasts>

Yeasts include, in addition to yeasts, yeast disruption products prepared by disrupting a yeast to decompose its components by autolysis, yeast decomposition products prepared by decomposing components by a treatment with an enzyme or hot water, and also yeast extracts prepared by extracting components from a yeast, a disruption product thereof, or a decomposition product thereof, followed by purification, concentration, etc.

Yeasts used in the invention are not particularly limited as long as they are yeasts traditionally used in foods, and specific examples thereof include brewer's yeast, baker's yeast, torula yeast, and milk yeast. Among them, milk yeast is preferable. They may be used alone, and it is also possible to use a mixture of two or more kinds.

As yeasts used in the invention, particularly, yeasts having a high degree of protein decomposition and a reduced content of bitter-tasting peptides, etc., are preferable.

In addition, yeasts containing γ-glutamyl peptides, such as glutatine, are preferable, and those having a γ-glutamyl peptide content of 1 ppm or more are still more preferable.

As yeasts, commercially available products such as "Koku Base LYC-P", "Koku Base LYM-P", "Koku Base LYS-P", and "Koku Base LYS-H" manufactured by Dai-Nippon Meiji Sugar Co., Ltd., and "Ajirex NH" manufactured by Kohjin Life Sciences Co., Ltd., are usable.

Some commercially available products of yeasts have sodium chloride added thereto as an auxiliary material. In the case where the amount of sodium is large, the adverse effect of excessive sodium on the flavor is more significant than the effect of the yeast. Therefore, the sodium chloride content in the yeast is preferably 10 mass% or less, still more preferably 5 mass% or less, particularly preferably 3 mass% or less, and most preferably 1 mass% or less.

### <Content of Components (A), (B), (D), and (E)>

The milk beverage of the invention may contain one or more of the above components (A), (B), (D), and (E). In the case where two or more of the components are contained, the total amount thereof in the milk beverage of the invention is preferably 0.0001 mass% or more, more preferably 0.001 mass% or more, and particularly preferably 0.01 mass% or more, and is preferably 5.0 mass% or less, preferably 2.0 mass% or less, and particularly preferably 1.0 mass% or less. When the content of the components (A), (B), (D), and (E) is within this range, this is likely to be effective in imparting richness, milky flavor, and the like without disturbing the balance of taste with unpleasant flavor, etc., and improving the quality of taste.

In particular, among the components (A), (B), (D), and (E), the milk beverage of the invention preferably contains the component (A), still more preferably contains a combination of the component (A) and the component (D), and most preferably contains a combination of the component (A), the component (B), and the component (D).

In particular, in the case where the milk beverage of the invention contains the component (A), it is preferable that the content thereof is 0.001 mass% or more, particularly 0.01 mass% or more, and 5.0 mass% or less, particularly 2.0 mass% or less. In addition, in the case where the milk beverage of the invention contains the component (B), it is preferable that the content thereof is 0.0001 mass% or more, particularly 0.001 mass% or more, and 5.0 mass% or less, particularly 2.0 mass% or less. In the case where the milk beverage of the invention contains the component (D), it is preferable that the content thereof is 0.0001 mass% or more, particularly 0.001 mass% or more, and 5.0 mass% or less, particularly 2.0 mass% or less. In the case where the milk beverage of the invention contains the component (E), it is preferable that the content thereof is 0.0001 mass% or more, particularly 0.001 mass% or more, and 5.0 mass% or less, particularly 2.0 mass% or less.

In addition, with respect to the content ratio between the dairy product and the components (A), (B), (D), and (E) in the milk beverage of the invention, the mass proportion of the components (A), (B), (D), and (E) (in the case where two or more components are contained, the total proportion thereof) relative to the dairy product is preferably 0.000005 or more, more preferably 0.00005 or more, still more preferably 0.0001 or more, particularly preferably 0.0005 or more, and most preferably 0.001 or more, and is preferably 1000 or less, more preferably 200 or less, still more preferably 20 or less, particularly preferably 2 or less, and most preferably 0.2 or less. When the content ratio of the components (A), (B), (D), and (E) is within this range, this is likely to be effective in imparting richness, milky flavor, and the like without disturbing the flavor of the dairy product and improving the quality of taste.

Incidentally, the components (A), (B), (D), and (E) used in the invention may be contained in the emulsified composition, or they may also be added together with other components after the production of the emulsified composition, and thus contained in the milk beverage.

Incidentally, with respect to the components (D) and (E) that are effective in relatively small amounts, in terms of handling, it is preferable that they are contained in the emulsified composition. With respect to the component (A) to be added in a relatively large amount, and the component (B) that may volatilize during heat sterilization or over time, whose amount to be added has to be determined considering the overall flavor of the milk beverage, it is preferable they are added together with other components after the production of the emulsified composition, and thus contained in the milk beverage.

In addition, it is preferable that the milk beverage contains, as other additives, materials to serve as beverage bases. Examples thereof include milk components, saccharides such as monosaccharides, disaccharides, oligosaccharides, and sugar alcohols, sweeteners such as high-intensity sweeteners, pH adjusters, emulsifiers, thickening stabilizers, animal and/or vegetable proteins, animal and/or vegetable fats, and antioxidants.

Needless to say, these materials or the materials described below in detail may be contained in the emulsified composition, or they may also be added together with other components after the production of the emulsified composition, and thus contained in the milk beverage.

Incidentally, as milk components, pH adjusters, emulsifiers, thickening stabilizers, animal and/or vegetable proteins, animal and/or vegetable fats, and antioxidants, those described above as examples of components other than fresh cheese contained in the emulsified composition may be used, and the same also applies to preferred examples.

Examples of saccharides other than the sugar alcohols described below include glucose, fructose, isomerized liquid sugar, arabinose, mannose, galactose, xylose, psicose, allose, tagatose, lactose, sucrose, maltose, trehalose, cellobiose, nigerose, isomaltose, gentibiose, palatinose, mannobiose, fructooligosaccharides, soybean oligosaccharides, galactosaccharides, lactosucrose, xylooligosaccharides, raffinose, and mannooligosaccharides. They may be used alone, and it is also possible to use two or more kinds. In particular, glucose, lactose, sucrose, and isomerized liquid sugar are preferable, glucose and isomerized liquid sugar are still more preferable, and glucose is the most preferable.

Examples of sugar alcohols include monosaccharide and disaccharide alcohols, such as erythritol, maltitol, xylitol, lactitol, mannitol, sorbitol, and reduced palatinose. They may be used alone, and it is also possible to use two or more kinds.

When the milk beverage contains a sugar alcohol, the total calories of the milk beverage can be reduced; therefore, this is preferable. In the case where the milk beverage of the invention contains a sugar alcohol, the sugar alcohol content in the milk beverage is preferably 0.001 mass% or more, more preferably 0.01 mass% or more, and still more preferably 0.05 mass% or more, and is preferably 30 mass% or less, more preferably 20 mass% or less, and still more preferably 10 mass% or less. When the sugar alcohol content in the milk beverage is within this range, a milk beverage having excellent flavor with fewer total calories can be produced, without the taste of the sugar alcohol itself disturbing the taste balance of the milk beverage; therefore, this is preferable.

Examples of high-intensity sweeteners include stevia, glycyrrhiza, acesulfame K, sucralose, neotame, aspartame, and saccharin. They may be used alone, and it is also possible to use two or more kinds.

When the milk beverage contains a high-intensity sweetener, sweetness can be imparted while suppressing the total calories of the milk beverage. In the case where the milk beverage of the invention contains a high-intensity sweetener, the high-intensity sweetener content in the milk beverage is preferably 0.00001 mass% or more, more preferably 0.00005 mass% or more, and still more preferably 0.0001 mass% or more, and is preferably 1.0 mass% or less, more preferably 0.5 mass% or less, and still more preferably 0.1 mass% or less. When the high-intensity sweetener content in the milk beverage is within this range, a milk beverage with sufficient sweetness can be obtained without using high-calorie saccharides or impairing the flavor; therefore, this is preferable.

Usually, the emulsifier content in the milk beverage of the invention is preferably 0.0005 mass% or more, more preferably 0.001 mass% or more, and is preferably 1 mass% or less, and more preferably 0.5 mass% or less. Incidentally, in the case where an emulsifier is contained in the emulsified composition, the emulsifier content in the milk beverage herein refers to the total content of emulsifiers including such an emulsifier.

The dairy product content in the milk beverage is preferably 0.005 mass% or more, more preferably 0.01 mass% or more, and particularly preferably 0.05 mass% or more, and is preferably 30 mass% or less, more preferably 20 mass% or less, and particularly preferably 15 mass% or less.

The milk solids content in the milk beverage of the invention is not particularly limited. However, in the case where it is necessary to further thicken the milky flavor, the content is usually 5.0 mass% or more, preferably 5.5% mass, more preferably 6.0 mass% or more, and most preferably 6.5 mass% or more, and is usually 15.0 mass% or less, preferably 13.0 mass% or less, more preferably 10.0 mass% or less, and most preferably 9.0 mass% or less. When the milk solids content in the milk beverage is within this range, the product is stable, and also thick milky flavor is obtained; therefore, this is preferable.

In addition, the not-fat milk solids content in milk solids is preferably 65 mass% or less, more preferably 60 mass% or less, and particularly preferably 55 mass% or less, and is preferably 10 mass% or more, more preferably 20 mass% or more, and particularly preferably 30 mass% or more. When the not-fat milk solids content in milk solids is within this range, rich milky flavor is provided, and also the formation of aggregates or precipitates during high-temperature sterilization or high-temperature storage can be prevented; therefore, this is preferable.

The pH of the milk beverage of the invention is not particularly limited. However, in order for the natural flavor of coffee or tea to be exerted, or in order to set the pH not higher than the optimal pH range for heat-resistant bacteria (harmful bacteria in the beverage), whereby the sterilization intensity can be reduced, thereby suppressing the flavor deterioration of the milk beverage due to heat, the pH is preferably 6.1 or less, still more preferably 6.0 or less, more preferably 5.9 or less, and most preferably 5.8 or less. The lower limit of the pH is usually 5.0, preferably 5.3, and most preferably 5.5.

The pH of the milk beverage can be adjusted by adding the above additives, such as sodium bicarbonate. These additives may be previously added a liquid to serve as a beverage base, water, a coffee extract liquid, a tea extract liquid, a milk component, a vegetable oil or fat, and/or an emulsified composition thereof, for example, or may also be added after the composition of the milk beverage is finally determined.

The total calories of the milk beverage of the invention per 100 ml are preferably less than 5.0 kcal, and more preferably less than 4.5 kcal. When the total calories per 100 ml are less than 5.0 kcal, such a milk beverage can meet the recent demands for lower-calorie beverages.

The milk beverage of the invention can be produced, for example, by mixing a liquid to serve as a beverage base, the above emulsified composition, the above additives, water, and the like, followed by a homogenization treatment using a homogenizer or the like. This homogenization treatment is performed under heated conditions at 40 to 80°C. In the emulsification step using a homogenizer, as high-pressure conditions, usually the pressure is preferably 5 MPa or more, and more preferably 10 MPa or more, and is preferably 200 MPa or less, and preferably 100 MPa or less.

After this homogenization treatment, it is preferable to perform a sterilization treatment by retort sterilization, ultrahigh-temperature flash pasteurization, or a like sterilization method. Incidentally, in the case of normal-temperature distribution or high-temperature distribution and sale in a hot vendor or the like, as a measure against deterioration due to bacteria, etc., a sterilization intensity F₀ of usually 5 or more, preferably 10 or more, is required.

Examples of such milk beverages according to the invention include coffee beverages, tea beverages, cocoa beverages, and acidic milk beverages.

### Examples

The invention will be described in further detail with reference to examples. However, within the gist thereof, the invention is not limited to the description of the following examples.

The details of the components (A), (B), (D), and (E) used in the following examples and comparative examples are as follows. In addition, a whey mineral was used as the component (C). The components (B), (C), and (D) fall under the category of magnesium materials.

### <(A) Polysaccharide>

### Polysaccharide 1: Starch hydrolysate (dextrose equivalent: 23)

Trade name "Nisshoku Brancholigo", manufactured by Nihon Shokuhin Kako Co., Ltd.

### Polysaccharide 2: Starch hydrolysate

Trade name "Nisshoku Cleartose #56", manufactured by Nihon Shokuhin Kako Co., Ltd.

### <(B) Milk Flavoring Agent>

Flavoring agent 1: Trade name "Milk Rich Base L", manufactured by Kyodo Milk Industry Co., Ltd.

### (Magnesium content: 0.04 mass%)

Flavoring agent 2: Trade name "Milk Conc. Base KB", manufactured by Kyodo Milk Industry Co., Ltd.

### (Magnesium content: 0.01 mass%)

### <(C) Mineral Material>

Whey mineral: Trade name "NWL-6", manufactured by Kyodo Milk Industry Co., Ltd.

### (Magnesium content: 0.02 mass%)

### <(D) Butter Milk>

Buttermilk powder: manufactured by Yotsuba Milk Products Co., Ltd.

### (Magnesium content: 0.1 mass%)

### <(E) Yeast>

Yeast extract 1: Yeast extract, trade name "Koku Base LYC-P", manufactured by Dai-Nippon Meiji Sugar Co., Ltd.
Yeast extract 2: Yeast extract, trade name "Koku Base LYM-P", manufactured by Dai-Nippon Meiji Sugar Co., Ltd.
Yeast extract 3: Yeast extract, trade name "Koku Base LYS-P", manufactured by Dai-Nippon Meiji Sugar Co., Ltd.

### <Production Example 1>

300 g of an aqueous phase having previously dispersed therein 12 g of sodium caseinate, 13 g of a sucrose fatty acid ester (carbon number of fatty acid =16 and 18, monoester content = 77 mass%), 3 g of a polyglycerol fatty acid ester (Ryoto^{®} Polyglycerol Ester S-10D, manufactured by Mitsubishi-Kagaku Foods Corporation), and 2 g of monoglyceride succinate (carbon number of fatty acid = 16 and 18) was heated to 65°C. Subsequently, 600 g of non-fermented cream cheese made from milk and fresh cream as raw materials (total solid content: 61 mass%, milk fat content: 51 mass%) was added and pre-emulsified using a homomixer at a rotation speed of 8000 rpm for 5 minutes. Water was further added to adjust the total amount to 1000 g, and the mixture was homogenized twice using a high-pressure homogenizer at 65°C and 20 MPa, then placed in a container, and subjected to a sterilization treatment at 90°C for 15 minutes, thereby giving a composition 1 (fat: 31 mass%, Mg: 0.0072 mass%, Na: 0.068 mass%, K: 0.101 mass%) (hereinafter referred to as "composition 1").

### <Examples 1 to 4, Comparative Examples 1 to 6>

1.5 g of instant coffee as a coffee extract, 0.28 g of the composition 1 obtained in Production Example 1 (containing 60 mass% cream cheese), and 0.056 g of sodium bicarbonate were mixed and dissolved in water. The additives shown in Table 1 were added to the resulting solution, and thoroughly mixed and dissolved. Subsequently, water was further added to make the total amount 100 g, thereby giving an emulsified composition of the invention (= milk beverage).

Four panelists each tasted the obtained milk beverages at normal temperature and then evaluated them based on the following evaluation criteria. The results are shown in Table 1. From the results in Table 1, it turned out that particularly for milky flavor, it is important that Mg is contained in a certain mass ratio to lipid.

### <Richness in Taste>

Excellent: Thick texture
Good: Slightly thick texture
Fair: Slightly watery
Poor: Watery

### <Milky Flavor>

Excellent: Strong milky flavor
Good: Slightly strong milky flavor
Fair: Weak milky flavor
Poor: No milky flavor

### <Foreign Taste and Odor as Milk Coffee>

Excellent: No foreign taste or odor
Good: Almost no foreign taste or odor
Fair: Slight foreign taste and odor
Poor: Strong foreign taste and odor

It turned out that a milk beverage using the emulsified composition of the invention has excellent milky flavor.

**[Table 1] Examples 1 to 4 are comparative examples.**

| | Kinds of Additives and Amounts Added (g) | | | | | | | | | | Evaluation Results | | | Mg/Fat | Na/Fat | K/Fat |
|---|---|---|---|---|---|---|---|---|---|---|---|---|---|---|---|---|
| | Composition 1 | Component (A) | | Component (D) | Component (E) | | | Component (C) | Component (B) | | | | | | | |
| | | Polysaccharide 1 | Polysaccharide 2 | Buttermilk Powder | Yeast Extract 1 | Yeast Extract 2 | Yeast Extract 3 | Whey Mineral | Flavoring Agent 1 | Flavoring Agent 2 | Richness in Taste | Milky Flavor | Foreign Taste and Odor | | | |
| Comparative Example 1 | 0.05 | | | | | | | | | | Poor | Fair | Excellent | 0.000232 | 0.002194 | 0.003258 |
| Comparative Example 2 | | 0.05 | | | | | | | | | Excellent | Fair | Excellent | 0.000232 | 0.002194 | 0.003258 |
| Comparative Example 3 | | | 0.05 | | | | | | | | Good | Fair | Excellent | 0.000232 | 0.002194 | 0.003258 |
| Comparative Example 4 | | | | | 0.05 | | | | | | Good | Fair | Poor | 0.000232 | 0.008991 | 0.003258 |
| Comparative Example 5 | | | | | | 0.03 | | | | | Good | Fair | Poor | 0.000232 | 0.003265 | 0.003258 |
| Comparative Example 6 | | | | | | | 0.03 | | | | Good | Fair | Fair | 0.000232 | 0.009590 | 0.003258 |
| Example 1 | | | | 0.05 | | | | | | | Good | Good | Good | 0.000760 | 0.004747 | 0.011695 |
| Example 2 | | | | | | | | 0.05 | | | Fair | Excellent | Excellent | 0.000342 | 0.005615 | 0.017659 |
| Example 3 | | | | | | | | | 0.05 | | Fair | Excellent | Good | 0.000412 | 0.004689 | 0.005977 |
| Example 4 | | | | | | | | | | 0.05 | Poor | Good | Fair | 0.000304 | 0.004555 | 0.004543 |

### <Examples 5 to 22, Comparative Examples 7 to 13>

300 g of an aqueous phase having previously dispersed therein 12 g of sodium caseinate, 17 g of a sucrose fatty acid ester (carbon number of fatty acid =16 and 18, monoester content = 77 mass%), 7.5 g of a polyglycerol fatty acid ester (Ryoto^{®} Polyglycerol Ester SWA-10D, manufactured by Mitsubishi-Kagaku Foods Corporation), and 2 g of monoglyceride succinate (carbon number of fatty acid = 16 and 18) was heated to 65°C. Subsequently, 600 g of non-fermented cream cheese made from milk and fresh cream as raw materials (total solid content: 61 mass%, milk fat content: 51 mass%) was added and pre-emulsified using a homomixer at a rotation speed of 8000 rpm for 5 minutes. Water was further added to adjust the total amount to 1000 g, and the mixture was homogenized twice using a high-pressure homogenizer at 65°C and 20 MPa and then subjected to a sterilization treatment at 90°C for 15 minutes, thereby giving a composition 2 (milk fat content: 31 mass%).

The composition 2, magnesium chloride (Mg content: 12 mass%), and water were mixed in arbitrary ratios, thereby preparing emulsified compositions of the invention (= milk beverages) having various magnesium/fat mass ratios as shown in Table 2.

Three persons tasted and evaluated the milk beverages based on the following criteria. The results are shown in Table 2.

It turned out that the optimal range of the amount of magnesium to be added varies with the lipid concentration, and that such an optimal range is, regardless of whether the lipid concentration is high or low, a range in which the mass ratio of magnesium to fat is a certain value.

### <Quality of Taste: Milky Richness and Feeling of Strangeness due to Minerals>

Excellent: The beverage has milk-like richness, and no particular feeling of strangeness is caused.
Good: The beverage has milk-like richness, and although a feeling of strangeness is slightly caused, it is acceptable.
Fair: The beverage slightly has milk-like richness, but it is weak, or a mineral taste is noted, causing a feeling of strangeness.
Poor: The beverage lacks richness and is watery, or a strong mineral taste is noted; the quality of taste is obviously different from milk.

**[Table 2] Examples 5 to 7, Examples 11 to 16, and Examples 20 to 22 are comparative examples.**

| | Comparative Example 8 | Example 5 | Example 6 | Example 7 | Example 8 | Example 9 | Example 10 | Example 11 | Example 12 | Example 13 | Comparative Example 9 | Comparative Example 10 |
|---|---|---|---|---|---|---|---|---|---|---|---|---|
| Composition 2 | 10% | 10% | 10% | 10% | 10% | 10% | 10% | 10% | 10% | 10% | 10% | 10% |
| Magnesium Chloride | None | 0.002% | 0.007% | 0.013% | 0.020% | 0.075% | 0.100% | 0.150% | 0.200% | 0.250% | 0.350% | 0.400% |
| Fat | 3.1% | 3.1% | 3.1% | 3.1% | 3.1% | 3.1% | 3.1% | 3.1% | 3.1% | 3.1% | 3.1% | 3.1% |
| Mg | 0.00072% | 0.00096% | 0.00156% | 0.00227% | 0.00311% | 0.00968% | 0.01267% | 0.01865% | 0.02462% | 0.03060% | 0.04255% | 0.04852% |
| Mg/Fat | 0.0002 | 0.0003 | 0.0005 | 0.0007 | 0.0010 | 0.0031 | 0.0041 | 0.0060 | 0.0079 | 0.0099 | 0.0137 | 0.0157 |
| Quality of Taste | Poor | Fair | Good | Good | Excellent | Excellent | Excellent | Good | Fair | Fair | Poor | Poor |

| | Comparative Example 11 | Example 14 | Example 15 | Example 16 | Example 17 | Example 18 | Example 19 | Example 20 | Example 21 | Example 22 | Comparative Example 12 | Comparative Example 13 |
|---|---|---|---|---|---|---|---|---|---|---|---|---|
| Composition 2 | 1% | 1% | 1% | 1% | 1% | 1% | 1% | 1% | 1% | 1% | 1% | 1% |
| Magnesium Chloride | None | 0.0002% | 0.0007% | 0.0013% | 0.0020% | 0.0075% | 0.0100% | 0.0150% | 0.0200% | 0.0250% | 0.0350% | 0.0400% |
| Fat | 0.31% | 0.31% | 0.31% | 0.31% | 0.31% | 0.31% | 0.31% | 0.31% | 0.31% | 0.31% | 0.31% | 0.31% |
| Mg | 0.00007% | 0.00010% | 0.00016% | 0.00023% | 0.00031% | 0.00097% | 0.00127% | 0.00186% | 0.00246% | 0.00306% | 0.00425% | 0.00485% |
| Mg/Fat | 0.0002 | 0.0003 | 0.0005 | 0.0007 | 0.0010 | 0.0031 | 0.0041 | 0.0060 | 0.0079 | 0.0099 | 0.0137 | 0.0157 |
| Quality of Taste | Poor | Fair | Fair | Good | Excellent | Excellent | Excellent | Good | Fair | Fair | Poor | Poor |
| * % in the table is mass%. | | | | | | | | | | | | |

### <Reference Examples>

Reference examples are examples in which no magnesium material is mixed.

In the same manner as in Examples 5 to 22 and Comparative Examples 7 to 13, the composition 2, sodium chloride (Na content: 39 mass%), potassium chloride (K content: 52 mass%), and water were mixed in arbitrary ratios, thereby preparing milk beverages having various sodium/fat and potassium/fat mass ratios as shown in Table 3, and they were evaluated. The results are shown in Table 3.

It turned out that, similarly to magnesium, the optimal ranges of the amounts of sodium and potassium to be added vary with the lipid concentration, and that such an optimal range is, regardless of whether the lipid concentration is high or low, a range in which the mass ratio of magnesium or potassium to fat is a certain value.

**[Table 3]**

| | Reference Example 1 | Reference Example 2 | Reference Example 3 | Reference Example 4 | Reference Example 5 | Reference Example 6 | Reference Example 7 | Reference Example 8 | Reference Example 9 | Reference Example 10 | Reference Example 11 |
|---|---|---|---|---|---|---|---|---|---|---|---|
| Composition 2 | 10% | 10% | 10% | 10% | 10% | 10% | 10% | 10% | 10% | 10% | 10% |
| Sodium Chloride | None | 0.007% | 0.015% | 0.030% | 0.065% | 0.080% | 0.100% | 0.120% | 0.140% | 0.180% | 0.220% |
| Fat | 3.1% | 3.1% | 3.1% | 3.1% | 3.1% | 3.1% | 3.1% | 3.1% | 3.1% | 3.1% | 3.1% |
| Na | 0.0068% | 0.0096% | 0.0127% | 0.0186% | 0.0324% | 0.0383% | 0.0462% | 0.0540% | 0.0619% | 0.0776% | 0.0934% |
| Na/Fat | 0.0022 | 0.0031 | 0.0041 | 0.0060 | 0.0104 | 0.0124 | 0.0149 | 0.0174 | 0.0200 | 0.0250 | 0.0301 |
| Quality of Taste | Poor | Fair | Good | Excellent | Excellent | Excellent | Good | Fair | Fair | Poor | Poor |

| | Reference Example 12 | Reference Example 13 | Reference Example 14 | Reference Example 15 | Reference Example 16 | Reference Example 17 | Reference Example 18 | Reference Example 19 | Reference Example 20 | Reference Example 21 | Reference Example 22 |
|---|---|---|---|---|---|---|---|---|---|---|---|
| Composition 2 | 1% | 1% | 1% | 1% | 1% | 1% | 1% | 1% | 1% | 1% | 1% |
| Sodium Chloride | None | 0.0007% | 0.0015% | 0.0030% | 0.0065% | 0.0080% | 0.0100% | 0.0120% | 0.0140% | 0.0180% | 0.0220% |
| Fat | 0.31% | 0.31% | 0.31% | 0.31% | 0.31% | 0.31% | 0.31% | 0.31% | 0.31% | 0.31% | 0.31% |
| Na | 0.00068% | 0.00096% | 0.00127% | 0.00186% | 0.00324% | 0.00383% | 0.00462% | 0.00540% | 0.00619% | 0.00776% | 0.00934% |
| Na/Fat | 0.0022 | 0.0031 | 0.0041 | 0.0060 | 0.0104 | 0.0124 | 0.0149 | 0.0174 | 0.0200 | 0.0250 | 0.0301 |
| Quality of Taste | Poor | Fair | Good | Excellent | Excellent | Excellent | Good | Good | Fair | Poor | Poor |

| | Reference Example 23 | Reference Example 24 | Reference Example 25 | Reference Example 26 | Reference Example 27 | Reference Example 28 | Reference Example 29 | Reference Example 30 | Reference Example 31 | Reference Example 32 | Reference Example 33 |
|---|---|---|---|---|---|---|---|---|---|---|---|
| Composition 2 | 10% | 10% | 10% | 10% | 10% | 10% | 10% | 10% | 10% | 10% | 10% |
| Potassium Chloride | None | 0.016% | 0.028% | 0.040% | 0.070% | 0.100% | 0.160% | 0.200% | 0.215% | 0.250% | 0.300% |
| Fat | 3.1% | 3.1% | 3.1% | 3.1% | 3.1% | 3.1% | 3.1% | 3.1% | 3.1% | 3.1% | 3.1% |
| K | 0.0101% | 0.0185% | 0.0248% | 0.0311% | 0.468% | 0.0626% | 0.0940% | 0.1150% | 0.1229% | 0.1412% | 0.1675% |
| K/Fat | 0.0033 | 0.0060 | 0.0080 | 0.0100 | 0.0151 | 0.0202 | 0.0303 | 0.0371 | 0.0396 | 0.0456 | 0.0540 |
| Quality of Taste | Poor | Fair | Excellent | Excellent | Excellent | Good | Fair | Fair | Fair | Poor | Poor |

| | Reference Example 34 | Reference Example 35 | Reference Example 36 | Reference Example 37 | Reference Example 38 | Reference Example 39 | Reference Example 40 | Reference Example 41 | Reference Example 42 | Reference Example 43 | Reference Example 44 |
|---|---|---|---|---|---|---|---|---|---|---|---|
| Composition 2 | 1% | 1% | 1% | 1% | 1% | 1% | 1% | 1% | 1% | 1% | 1% |
| Potassium Chloride | None | 0.0016% | 0.0028% | 0.0040% | 0.0070% | 0.0100% | 0.0160% | 0.0200% | 0.0215% | 0.0250% | 0.0300% |
| Fat | 0.31% | 0.31% | 0.31% | 0.31% | 0.31% | 0.31% | 0.31% | 0.31% | 0.31% | 0.31% | 0.31% |
| K | 0.0010% | 0.0018% | 0.0025% | 0.0031% | 0.0047% | 0.0063% | 0.0094% | 0.0115% | 0.0123% | 0.0141 % | 0.0168% |
| K/Fat | 0.0033 | 0.0060 | 0.0080 | 0.0100 | 0.0151 | 0.0202 | 0.0303 | 0.0371 | 0.0396 | 0.0456 | 0.0540 |
| Quality of Taste | Poor | Fair | Excellent | Excellent | Excellent | Good | Good | Fair | Fair | Poor | Poor |
| * % in the table is mass%. | | | | | | | | | | | |

### <Examples 23 to 28>

The combinations of materials (additives) shown in Table 4 were evaluated in the same manner based on the same criteria as in Examples 1 to 4. The results are shown in Table 4.

It turned out that when Mg is contained in a certain mass ratio to lipid, and a polysaccharide (component A) is also used, richness is further imparted to the milky flavor. Further, it turned out that in order to further improve the quality of taste, it is important to also use a buttermilk (component D) and/or a milk flavoring agent (component B).

**[Table 4] Examples 23 to 28 are comparative examples.**

| | Kinds of Additives and Amounts Added (g) | | | | Evaluation Results | | | Mg/Fat | Na/Fat | K/Fat |
|---|---|---|---|---|---|---|---|---|---|---|
| | Component (A) | Component (D) | Component (C) | Component (B) | Richness in Taste | Milky Flavor | Foreign Taste and Odor | | | |
| | Polysaccharide 1 | Buttermilk Powder | Whey Mineral | Flavoring Agent 1 | | | | | | |
| Example 23 | | | 0.04 | 0.01 | Fair | Excellent | Good | 0.000356 | 0.005420 | 0.015198 |
| Example 24 | | 0.01 | 0.04 | | Fair | Good | Good | 0.000428 | 0.005436 | 0.016426 |
| Example 25 | 0.02 | | 0.02 | 0.01 | Good | Excellent | Excellent | 0.000313 | 0.004070 | 0.009515 |
| Example 26 | 0.02 | 0.01 | 0.02 | | Excellent | Excellent | Good | 0.000385 | 0.004079 | 0.010714 |
| Example 27 | | 0.01 | 0.02 | 0.02 | Fair | Excellent | Good | 0.000455 | 0.005058 | 0.011641 |
| Example 28 | 0.03 | 0.005 | 0.01 | 0.005 | Excellent | Excellent | Excellent | 0.000327 | 0.003397 | 0.007264 |

### <Examples 29 to 33>

300 g of an aqueous phase having previously dispersed therein 8 g of sodium caseinate, 10 g of a sucrose fatty acid ester (carbon number of fatty acid =16 and 18, monoester content = 77 mass%), 5 g of a polyglycerol fatty acid ester (Ryoto^{®} Polyglycerol Ester SWA-10D, manufactured by Mitsubishi-Kagaku Foods Corporation), and 1.5 g of monoglyceride succinate (carbon number of fatty acid = 16 and 18) was heated to 65°C. Subsequently, 15 g of skimmed milk powder, 9 g of lactose, 45 g of MPC (Milk Protein Concentrate), and 6 g of sugar were added. Further, 190 g of non-fermented cream cheese made from milk and fresh cream as raw materials (total solid content: 61 mass%, milk fat content: 51 mass%) was added and pre-emulsified using a homomixer at a rotation speed of 8000 rpm for 5 minutes. Water was further added to adjust the total amount to 1000 g, and the mixture was homogenized twice using a high-pressure homogenizer at 65°C and 20 MPa and then subjected to a sterilization treatment at 90°C for 15 minutes, thereby giving a composition 3 (milk fat content: 9.7 mass%).

5 g of the obtained composition 3, magnesium chloride, sodium chloride, potassium chloride, and water were mixed to make the total amount 15 g, thereby preparing an emulsified composition of the invention. 15 g of the obtained emulsified composition and 15 g of a 1.5 mass% aqueous solution of instant coffee were mixed, thereby preparing a coffee beverage (milk beverage).

Table 5 shows the concentrations of magnesium chloride, sodium chloride, and potassium chloride in each coffee beverage, as well as the mass ratios of magnesium, sodium, and potassium to fat in each emulsified composition and coffee beverage.

Three persons tasted and evaluated the emulsified compositions and the coffee beverages based on the same criteria as in Examples 5 to 22 and Comparative Examples 7 to 13. The results are shown in Table 5.

Three persons tasted and evaluated the coffee beverages based on the same criteria as in Examples 5 to 22 and Comparative Examples 7 to 13. The results are shown in Table 5. % in the table is mass%.

In each example, the magnesium material is within a suitable range, and thus the emulsified composition and the coffee beverage both have excellent milky flavor. However, it turned out that, especially in coffee beverages, the taste is affected by potassium from coffee, and when a potassium material is added too much, this tends to result in a strong foreign taste due to potassium; therefore, it is preferable to optimize the amount of potassium material.

**[Table 5]**

| | | Example 29 | Example 30 | Example 31 | Example 32 | Example 33 |
|---|---|---|---|---|---|---|
| Mass Ratio in Coffee Beverage | Magnesium Chloride | 0.050% | 0.017% | 0.027% | 0.023% | 0.023% |
| | Sodium Chloride | 0.030% | 0.033% | 0.033% | 0.037% | 0.040% |
| | Potassium Chloride | 0.120% | 0.067% | 0.050% | 0.050% | 0.050% |
| Emulsified Composition | Ma/Fat | 0.005 | 0.002 | 0.003 | 0.003 | 0.003 |
| | Na/Fat | 0.01 | 0.01 | 0.01 | 0.01 | 0.01 |
| | K/Fat | 0.05 | 0.03 | 0.03 | 0.03 | 0.03 |
| | Evaluation | Fair | Good | Excellent | Excellent | Excellent |
| Coffee Beverage | Ma/Fat | 0.007 * | 0.004 | 0.005 | 0.005 | 0.005 |
| | Na/Fat | 0.01 | 0.01 | 0.01 | 0.01 | 0.01 |
| | K/Fat | 0.07 | 0.05 | 0.04 | 0.04 | 0.04 |
| | Evaluation | Fair | Fair | Excellent | Excellent | Excellent |

| | | | | | | |
|---|---|---|---|---|---|---|
| * not in accordance with the claims | | | | | | |

### <Example 34> (comparative)

300 g of an aqueous phase having previously dispersed therein 8 g of sodium caseinate, 10 g of a sucrose fatty acid ester (carbon number of fatty acid =16 and 18, monoester content = 77 mass%), 5 g of a polyglycerol fatty acid ester (Ryoto^{®} Polyglycerol Ester SWA-10D, manufactured by Mitsubishi-Kagaku Foods Corporation), and 1.5 g of monoglyceride succinate (carbon number of fatty acid = 16 and 18) was heated to 65°C. Subsequently, 15 g of a buttermilk powder, 9 g of lactose, 45 g of MPC (Milk Protein Concentrate), and 6 g of sugar were added. Further, 190 g of non-fermented cream cheese made from milk and fresh cream as raw materials (total solid content: 61 mass%, milk fat content: 51 mass%) was added and pre-emulsified using a homomixer at a rotation speed of 8000 rpm for 5 minutes. Water was further added to adjust the total amount to 1000 g, and the mixture was homogenized twice using a high-pressure homogenizer at 65°C and 20 MPa and then subjected to a sterilization treatment at 90°C for 15 minutes, thereby giving an emulsified composition of the invention (milk fat content: 9.7 mass%, Mg/fat: 0.0009, K/fat: 0.01, Na/fat: 0.004).

The emulsified composition had no foreign taste, and had excellent milky flavor and richness.

### <Example 35> (comparative)

Sodium bicarbonate previously dissolved in hot water was added to 480 g of a coffee extract liquid (Bx: 2.9) to adjust the pH. Subsequently, 7.0 g of erythritol, 0.15 g of acesulfame K, 0.08 g of stevia, 2.6 g of the composition 1 obtained in Production Example 1 (containing 60 mass% cream cheese), 0.3 g of the polysaccharide 1, 0.1 g of a whey mineral, 0.05 g of a buttermilk powder, 0.05 g of the flavoring agent 1, and a proper amount of water were added. The materials were mixed and dissolved, and water was further added to make the total amount 1000 g.

At this time, the mass ratio of magnesium to fat contained in the material was Mg/fat = 0.00033. The solution was heated to 65°C, homogenized using a high-pressure homogenizer at a pressure of 20 MPa, then placed in a can container, and subjected to retort sterilization at 121°C for 30 minutes, thereby preparing a canned milk coffee (milk beverage). The pH of the milk beverage after sterilization was 6.0.

After the above sterilization, the obtained canned milk coffee was stored at 5°C for one day and then opened. Four panelists tasted and evaluated the beverage based on the same criteria as in Example 1. In addition, from the calories of each component added, the total calories per 100 ml were calculated. At the same time, from the constituent components of the used raw materials, the proportion of non-fat milk solids in milk solids was calculated. The results are shown in Table 6.

### <Comparative Example 14>

A canned milk coffee was prepared in the same manner as in Example 35, except that the amount of composition 1 (containing 60 mass% cream cheese) added was changed to 0.33 g, and the polysaccharide 1, a whey mineral, a buttermilk powder, and the flavoring agent 1 were not added. At this time, the mass ratio of magnesium to fat contained in the material was Mg/fat = 0.00023. The pH of the beverage after sterilization was 5.9.

The obtained canned milk coffee was stored at 5°C for one day, and then four panelists tasted and evaluated the beverage in the same manner as in Example 18. In addition, in the same manner, the total calories per 100 ml and the proportion of non-fat milk solids in milk solids were determined. The results are shown in Table 6.

**[Table 6]**

| | Richness in Taste | Milky Flavor | Foreign Taste and Odor | Total Calories (kcal/ 100ml) | Non-Fat Milk Solids/Milk Solids |
|---|---|---|---|---|---|
| Example 35* | Excellent | Excellent | Excellent | 4.7 | 14 |
| Comparative Example 14 | Poor | Fair | Excellent | 4.7 | 14 |

| | | | | | |
|---|---|---|---|---|---|
| * Comparative example | | | | | |

The above results show that although the milk beverage of the invention uses fresh cheese, it has no foreign taste or odor and is excellent in terms of the quality of taste, including richness, milky flavor, etc.

## Claims

1. An emulsified composition comprising a dairy product, an emulsifier, and a magnesium material, wherein
the dairy product has a total solid content of 30 mass% or more, and has the ratio of milk fat to total solids of 30 mass% or more,
the mass ratio between fat and magnesium in the emulsified composition (fat : magnesium) is 1 : 0.001 to 1 : 0.005,
the mass ratio between fat and sodium in the emulsified composition (fat: sodium) is 1 : 0.0001 to 1 : 0.02, and
the emulsifier is at least one selected from the group consisting of sucrose fatty acid esters, polysorbate, glycerol fatty acid esters, sorbitan fatty acid esters, propylene glycol fatty acid esters, sodium stearoyl lactylate, calcium stearoyl lactylate, enzymatically decomposed lecithin, lecithin, and saponin.

2. The emulsified composition according to claim 1, wherein in the emulsified composition, the mass ratio between fat and potassium (fat : potassium) is 1 : 0.0001 to 1 : 0.04.

3. The emulsified composition according to claim 1 or 2, wherein the dairy product is fresh cheese or cream.

4. The emulsified composition according to any one of claims 1 to 3, further comprising at least one of casein and casein salt.

5. The emulsified composition according to any one of claims 1 to 4, wherein the magnesium material is a material selected from the group consisting of whey minerals, magnesium chloride, magnesium oxide, magnesium carbonate, magnesium sulfate, bittern, dolomite, raw salt, magnesium stearate, magnesium monohydrogen phosphate, trimagnesium phosphate, magnesium silicate, magnesium hydroxide, magnesium acetate, magnesium citrate, magnesium malate, magnesium benzoate, magnesium gluconate, magnesium L-glutamate, sepiolite, talc and phytin, or an organic acid or inorganic acid salt of the material.

6. A milk beverage made from an emulsified composition comprising a dairy product, an emulsifier, and a magnesium material, wherein
the dairy product has a total solid content of 30 mass% or more, and has the ratio of milk fat to total solids of 30 mass% or more,
the mass ratio between fat and magnesium in the emulsified composition (fat : magnesium) is 1 : 0.001 to 1 : 0.005,
the mass ratio between fat and sodium in the emulsified composition (fat: sodium) is 1 : 0.0001 to 1 : 0.02, and
the emulsifier is at least one selected from the group consisting of sucrose fatty acid esters, polysorbate, glycerol fatty acid esters, sorbitan fatty acid esters, propylene glycol fatty acid esters, sodium stearoyl lactylate, calcium stearoyl lactylate, enzymatically decomposed lecithin, lecithin, and saponin.

7. Use of the emulsified composition according to any one of claims 1 to 5 for producing a milk beverage.

8. The use according to claim 7, wherein the milk beverage additionally comprises a coffee extract or a tea extract.

9. A method for producing an emulsified composition, comprising mixing a dairy product, an emulsifier, and a magnesium material, wherein
the dairy product has a total solid content of 30 mass% or more, and has the ratio of milk fat to total solids of 30 mass% or more,
the mass ratio between fat and magnesium in the emulsified composition (fat : magnesium) is 1 : 0.001 to 1 : 0.005,
the mass ratio between fat and sodium in the emulsified composition (fat: sodium) is 1 : 0.0001 to 1 : 0.02, and
the emulsifier is at least one selected from the group consisting of sucrose fatty acid esters, polysorbate, glycerol fatty acid esters, sorbitan fatty acid esters, propylene glycol fatty acid esters, sodium stearoyl lactylate, calcium stearoyl lactylate, enzymatically decomposed lecithin, lecithin, and saponin.

## Patentansprüche

1. Emulgierte Zusammensetzung, die ein Milchprodukt, einen Emulgator und ein Magnesiummaterial umfasst, wobei
das Milchprodukt einen Gesamtfeststoffgehalt von 30 Massen-% oder mehr und ein Verhältnis von Milchfett zum Gesamtfeststoff von 30 Massen-% oder mehr aufweist,
das Massenverhältnis zwischen Fett und Magnesium in der emulgierten Zusammensetzung (Fett : Magnesium) 1 : 0,001 bis 1 : 0,005 beträgt,
das Massenverhältnis zwischen Fett und Natrium in der emulgierten Zusammensetzung (Fett : Natrium) 1 : 0,0001 bis 1 : 0,02 beträgt, und
der Emulgator mindestens einer ist, ausgewählt aus der Gruppe bestehend aus Saccharosefettsäureestern, Polysorbat, Glycerinfettsäureestern, Sorbitanfettsäureestern, Propylenglykolfettsäureestern, Natriumstearoyllactylat, Calciumstearoyllactylat, enzymatisch zersetztem Lecithin, Lecithin und Saponin.

2. Emulgierte Zusammensetzung gemäß Anspruch 1, wobei das Massenverhältnis zwischen Fett und Kalium in der emulgierten Zusammensetzung (Fett : Kalium) 1 : 0,0001 bis 1 : 0,04 beträgt.

3. Emulgierte Zusammensetzung gemäß Anspruch 1 oder 2, wobei das Milchprodukt Frischkäse oder Sahne ist.

4. Emulgierte Zusammensetzung gemäß mindestens einem der Ansprüche 1 bis 3, die ferner mindestens eines aus Kasein und Kaseinsalz umfasst.

5. Emulgierte Zusammensetzung gemäß mindestens einem der Ansprüche 1 bis 4, wobei das Magnesiummaterial ein Material ist, das aus der Gruppe ausgewählt ist, die aus Molkemineralen, Magnesiumchlorid, Magnesiumoxid, Magnesiumcarbonat, Magnesiumsulfat, Bitterstoffen, Dolomit, Rohsalz, Magnesiumstearat, Magnesiummonohydrogenphosphat, Trimagnesiumphosphat, Magnesiumsilikat, Magnesiumhydroxid, Magnesiumacetat, Magnesiumcitrat, Magnesiummalat, Magnesiumbenzoat, Magnesiumgluconat, Magnesium-L-Glutamat, Sepiolith, Talk und Phytin oder einer organischen Säure oder einem anorganischen Säuresalz des Materials besteht.

6. Milchgetränk, hergestellt aus einer emulgierten Zusammensetzung, die ein Milchprodukt, einen Emulgator und ein Magnesiummaterial umfasst, wobei
das Milchprodukt einen Gesamtfeststoffgehalt von 30 Massen-% oder mehr und ein Verhältnis von Milchfett zum Gesamtfeststoff von 30 Massen-% oder mehr aufweist,
das Massenverhältnis zwischen Fett und Magnesium in der emulgierten Zusammensetzung (Fett : Magnesium) 1 : 0,0001 bis 1 : 0,005 beträgt,
das Massenverhältnis zwischen Fett und Natrium in der emulgierten Zusammensetzung (Fett : Natrium) 1 : 0,0001 bis 1 : 0,02 beträgt, und
der Emulgator mindestens einer ist, ausgewählt aus der Gruppe bestehend aus Saccharosefettsäureestern, Polysorbat, Glycerinfettsäureestern, Sorbitanfettsäureestern, Propylenglykolfettsäureestern, Natriumstearoyllactylat, Calciumstearoyllactylat, enzymatisch zersetztem Lecithin, Lecithin und Saponin.

7. Verwendung der emulgierten Zusammensetzung gemäß mindestens einem der Ansprüche 1 bis 5 zur Herstellung eines Milchgetränks.

8. Verwendung gemäß Anspruch 7, wobei das Milchgetränk zusätzlich einen Kaffeeextrakt oder einen Teeextrakt umfasst.

9. Verfahren zur Herstellung einer emulgierten Zusammensetzung, welches das Mischen eines Milchprodukts, eines Emulgators und eines Magnesiummaterials umfasst, wobei
das Milchprodukt einen Gesamtfeststoffgehalt von 30 Massen-% oder mehr und ein Verhältnis von Milchfett zum Gesamtfeststoff von 30 Massen-% oder mehr aufweist,
das Massenverhältnis zwischen Fett und Magnesium in der emulgierten Zusammensetzung (Fett : Magnesium) 1 : 0,001 bis 1 : 0,005 beträgt,
das Massenverhältnis zwischen Fett und Natrium in der emulgierten Zusammensetzung (Fett : Natrium) 1 : 0,0001 bis 1 : 0,02 beträgt, und
der Emulgator mindestens einer ist, ausgewählt aus der Gruppe bestehend aus Saccharosefettsäureestern, Polysorbat, Glycerinfettsäureestern, Sorbitanfettsäureestern, Propylenglykolfettsäureestern, Natriumstearoyllactylat, Calciumstearoyllactylat, enzymatisch zersetztem Lecithin, Lecithin und Saponin.

## Revendications

1. Composition émulsifiée comprenant un produit laitier, un émulsifiant, et un matériau à base de magnésium, dans laquelle
le produit laitier a une teneur totale en solide de 30% en masse ou plus, et a le rapport de matière grasse laitière à des solides totaux de 30% en masse ou plus,
le rapport en masse entre la matière grasse et le magnésium dans la composition émulsifiée (matière grasse : magnésium) est de 1 : 0,001 à 1 : 0,005,
le rapport en masse entre la matière grasse et le sodium dans la composition émulsifiée (matière grasse : sodium) est de 1 : 0,0001 à 1 : 0,02, et
l'émulsifiant est au moins l'un choisi dans le groupe constitué par les esters d'acide gras de saccharose, le polysorbate, les esters d'acide gras de glycérol, les esters d'acide gras de sorbitan, les esters d'acide gras de propylène glycol, le stéaroyl-lactylate de sodium, le stéaroyl-lactylate de calcium, la lécithine décomposée enzymatiquement, la lécithine et la saponine.

2. La composition émulsifiée selon la revendication 1, dans laquelle dans la composition émulsifiée, le rapport en masse entre la matière grasse et le potassium (matière grasse : potassium) est de 1: 0,0001 à 1 : 0,04.

3. La composition émulsifiée selon la revendication 1 ou 2, dans laquelle le produit laitier est de la crème ou du fromage frais.

4. La composition émulsifiée selon l'une quelconque des revendications 1 à 3, comprenant en outre au moins l'un de la caséine ou d'un sel de caséine.

5. La composition émulsifiée selon l'une quelconque des revendications 1 à 4, dans laquelle le matériau à base de magnésium est un matériau choisi parmi le groupe constitué des minéraux du petit-lait, du chlorure de magnésium, de l'oxyde de magnésium, du carbonate de magnésium, du sulfate de magnésium, du butor, du dolomite, d'un sel cru, du stéarate de magnésium, du phosphate mono hydrogéné de magnésium, du phosphate de tri-magnésium, du silicate de magnésium, de l'hydroxyde de magnésium, de l'acétate de magnésium, du citrate de magnésium, du malate de magnésium, du benzoate de magnésium, du gluconate de magnésium, du L-glutamate de magnésium, du sépiolite, du talc et de la phytine, ou d'un acide organique ou un sel d'acide inorganique du matériau.

6. Boisson lactée faite à partir de la composition émulsifiée comprenant un produit laitier, un émulsifiant, et un matériau à base de magnésium, dans laquelle
le produit laitier a une teneur totale en solide de 30% en masse ou plus, et a le rapport de matière grasse laitière à des solides totaux de 30% en masse ou plus,
le rapport en masse entre la matière grasse et le magnésium dans la composition émulsifiée (matière grasse : magnésium) est de 1 : 0,001 à 1 : 0,005,
le rapport en masse entre la matière grasse et le sodium dans la composition émulsifiée (matière grasse : sodium) est de 1 : 0,0001 à 1 : 0,02, et
l'émulsifiant est au moins l'un choisi dans le groupe constitué par les esters d'acide gras de saccharose, le polysorbate, les esters d'acide gras de glycérol, les esters d'acide gras de sorbitan, les esters d'acide gras de propylène glycol, le stéaroyl-lactylate de sodium, le stéaroyl-lactylate de calcium, la lécithine décomposée enzymatiquement, la lécithine et la saponine.

7. Utilisation de la composition émulsifiée selon l'une quelconque des revendications 1 à 5 pour la production d'une boisson lactée.

8. L'utilisation selon la revendication 7, dans laquelle la boisson lactée comprend additionnellement un extrait de café ou un extrait de thé.

9. Procédé de production d'une composition émulsifiée, comprenant le mélange d'un produit laitier, d'un émulsifiant, et d'un matériau à base de magnésium, dans lequel
le produit laitier a une teneur totale en solide de 30% en masse ou plus, et a le rapport de matière grasse laitière à des solides totaux de 30% en masse ou plus,
le rapport en masse entre la matière grasse et le magnésium dans la composition émulsifiée (matière grasse : magnésium) est de 1 : 0,001 à 1 : 0,005,
le rapport en masse entre la matière grasse et le sodium dans la composition émulsifiée (matière grasse : sodium) est de 1 : 0,0001 à 1 : 0,02, et
l'émulsifiant est au moins l'un produit choisi dans le groupe constitué par les esters d'acide gras de saccharose, le polysorbate, les esters d'acide gras de glycérol, les esters d'acide gras de sorbitan, les esters d'acide gras de propylène glycol, le stéaroyl-lactylate de sodium, le stéaroyl-lactylate de calcium, la lécithine décomposée enzymatiquement, la lécithine et la saponine.
